# EUROPEAN PATENT SPECIFICATION

(11) **EP 1 958 240 B1**
(45) Date of publication and mention of the grant of the patent: **17.08.2016**
(21) Application number: 06831901.1
(22) Date of filing: 22.11.2006
(51) Int. Cl.: H01K 1/32, H01J 61/40

(54) **AN ELECTRIC LAMP**
ELEKTRISCHE LAMPE
LAMPE ELECTRIQUE

(30) Priority: 02.12.2005 EP 05111651
(43) Date of publication of application: 20.08.2008
(73) Proprietor: Philips Intellectual Property & Standards GmbH, 20099 Hamburg (DE); Koninklijke Philips N.V., 5656 AE Eindhoven (NL)
(72) Inventor: KUEPPER, Lukas, 52066 Aachen (DE); DOHMEN, Hans-Alo, 52066 Aachen (DE); RUSKE, Manfred, 52066 Aachen (DE)
(74) Representative: Rüber, Bernhard Jakob
(86) International application number: PCT/IB2006/054381
(87) International publication number: WO 2007/063453

(56) References cited:
- WO-A-2004/055859
- FR-A- 2 577 375
- US-A1- 2005 212 434
- US-B1- 6 331 750

## Description

This invention relates to an electric lamp for a vehicle headlight with low-beam function.

Vehicle headlights with low-beam function in the context of the invention are all those headlights, which generate a bright-dark cut-off, such as, for example, pure low-beam headlights, combined high- and low-beam headlights, pure fog headlights, combined low-beam and fog headlights, and curve illumination headlights.

Usually, headlights with a low-beam function are fitted with lamps which radiate visible light of substantially the same color in all spatial directions, so that in that case usually a traffic space illuminated with a homogeneous color is obtained.

A respective desired and/or required light color can be achieved by means of conventional coatings, which are provided in particular on the electric lamp in a known manner.

It is known that bluish light is better reflected against obstacles in the traffic space, for example traffic signs, and can thus be better or earlier observed in particular by the driver of the vehicle illuminating the respective traffic space, so that the traffic safety this usually enhanced thereby. Yellow light, by contrast, leads to a lower glare sensitivity on the part of a driver of an oncoming vehicle.

In the US 6,331,750 B1 a light source apparatus is disclosed that generates light having a plurality of colors comprising a light source, which emits a visible light, and an envelope having a clear portion and a layer of dichroic material. The light source emits white light and the yellow component of the color spectrum passes through the dichroic material while the blue color component of the spectrum is reflected back through the clear portion of the envelope or bulb. Thus, yellow light is emitted from half of the lamp and the other half emits a bluish-white light. One of the disadvantages of this described device is that two different portions at the envelope are necessary, especially a clear portion and a coating.

In the US 2005/0212434 AI a lamp for a reflection headlight is described with a light source inside the lamp envelope comprising a partial coating. The partial coating is arranged in total only on a portion of the outer surface of the envelope. The envelope in addition has a region, which has no coating, so that unfiltered light issues predominantly from this region. One portion of the partial coating is formed by an absorption coating. Disadvantageously, the unselected or undesired light is dissipated or absorbed within the lamp, where the undesired wavelengths are dissipated as heat.

The invention has for its object to eliminate the above mentioned disadvantages. In particular, it is an object of the invention to provide an electric lamp with a cheap, small and simple setup, whereby a better traffic safety is rendered when the low-beam function is realized without increasing the glare sensitivity.

The object is achieved by an electric lamp as taught by claim 1 of the present invention. Advantage embodiments of the inventive device are defined in the subclaims.

Accordingly, an electric lamp for a vehicle headlight with low-beam function is provided, comprising a light source emitting visible light, a transparent envelope having an exterior surface and an interior surface enclosing said light source, one multilayer structure provided on the exterior surface of the envelope, wherein a first fraction of light substantially with a bluish-white color is transmitted through the multilayer structure directly and a second fraction of light substantially with a yellowish, in particular with a yellowish-red color is transmitted through the multilayer structure after being reflected at the multilayer structure, wherein the multilayer structure being of none light absorbing materials is provided in such a way, that the color of light of a standard light source A being reflected at the multilayer structure lies within a triangle in the CIE 1931 Yxy color space defined by the x,y coordinates (0.58; 0.42), (0.58; 0.30) and (0.70; 0.30), wherein the lightness Y is in the range of 2.5 ≤ Y ≤ 17.5, whereby nearly none of the emitted visible light is absorbed by the multilayer structure.

One of the advantages of the invention is that an electric lamp is achieved, whereby the visibility of the vehicle driver by colored light is improved not disturbing other road participants during night. The present electric lamp applies to lighting devices especially to automotive headlights, in particular to daytime bulbs for motorbikes. One of the essential advantages of this electric lamp is that the multilayer structure provides a yellowish tuned light and a bluish light of the beam pattern at the same time. The yellowish light improves the visibility for oncoming drivers during daytime while the bluish tuned light improves the visibility in the peripheral area at night or at bad weather conditions. Surprisingly, it was found out that the second light being reflected at said inventive multilayer structure improves the signal function of the vehicle during daytime significantly, wherein the glare sensitivity is decreased. Preferably, the complete envelope comprises the multilayer structure. Thus, such lamps with said multilayer structure can be efficiently manufactured in an industrial mass manufacturing process.

During the operation of the electrical lamp the light source emits visible light, which is radiated to the envelope. The emitted visible, white light impinges the transparent envelope, in particular the multilayer structure, while substantially the bluish-white component of the color spectrum passes the multilayer structure. The other part of the emitted visible light is reflected as the second light comprising a yellowish color in the headlamp. This second light transmits the multilayer structure at another side of the envelope, in particular at the opposite side of the first reflection area. Advantageously, none of the emitted visible light is blocked by the multilayer structure, which consists of none absorption materials. Thus, an absence of heat energy accumulation of the electric lamp can be achieved.

According to a preferred embodiment the multilayer structure being an interference coating comprises at least two layers with a first layer having a high refractive index n_{H} of n_{H} ≥ 1.7 and a second layer having a low refractive index n_{L} of n_{L}≤ 1.6. The number of the layers of the interference coating influences the reflecting properties. To achieve the desired yellowish color of the second light a quorum of single layers is necessary. Preferably, the first layer is positioned on the exterior surface of the envelope. The second layer is coated upon the first layer.

In accordance with another embodiment, the multilayer structure comprises a sandwich structure, wherein the first and the second layer are positioned alternate to each other. The first layer can comprise Nb₂O₅ and/or TiO₂ and/or Ta₂O₅ and/or ZrO₂ and/or HfO₂ and/or Si₃N₄. The second layer can be made of SiO₂. In a one preferred embodiment of the electrical lamp the multilayer structure is a Nb₂O₅/SiO₂ interference coating comprising four first layers and four second layers. Certainly, the numbers of layers can be varied. As a result of the comparatively small number of layers, the manufacturing costs of such multilayer structures are comparatively low. Preferably, the thickness of the multilayer structure is less than 5 µm.

In another preferred embodiment of the invention the multilayer structure is a Si₃N₄/SiO₂ interference coating with five first layers and five second layers. Also, in this embodiment the number of layers can be varied. To achieve the desired reflecting properties of the multilayer structure the thickness of the first layer and the second layer is important. Preferably, the Nb₂O₅/SiO₂ interference coating comprises a first layer with a thickness T₁ in the range of 8nm ≤ T₁ ≤ 25nm and a second layer with a thickness T₂ in the range of 90nm ≤ T₂ 210nm. In case of the Si₃N₄/SiO₂ interference coating the first layer comprises a thickness T₁ in the range of 8nm ≤ T₁ ≤ 25nm and the second layer has a thickness T₂ in the range of 90nm ≤ T₂ ≤ 200nm.

Furthermore, it is preferred that an illumination distribution of the lamp on a vertical screen is produced with a bright-dark cut-off, wherein the region (illumination zone) lying below the bright-dark cut-off is illuminated by the first light substantially and the region at the bright-dark cut-off is illuminated by the second light substantially.

Advantageously, the first light is a bundle of lights leaving the electrical lamp substantially having peak wavelengths in the range of 400nm to 600nm. That means that the directly transmitted first light has an increased proportion typically in said wavelength range relative to the light leaving the light source. It is furthermore preferred that the second light is a bundle of lights leaving the electrical lamp substantially having peak wavelengths in the range from 600nm to 800nm. In other words the second light leaving the electrical lamp after being reflected at the multilayer structure has an increased proportion typically in said wavelength range relative to light leaving the light source. According to a preferred embodiment of the invention the illumination zone is illuminated by the first light comprising a bluish-white color. Only very small amounts of lights with a yellowish-redish color are passing the multilayer structure without being reflected at the multilayer structure. Thus, the illumination zone is illuminated by bluish-white light substantially. Consequently, a better traffic safety can be achieved, because objects in the illumination zone can be recognized earlier by the pure bluish-white light, wherein the glare sensitivity in the glare zone is not increased by the second light comprising a yellowish-redish color.

The multilayer structure can be provided, for example, by CVD (Chemical Vapour Deposition) or by vaporization, particularly by PVD (Physical Vapour Deposition) or by Sputtering. Alternatively, the multilayer structure is a sol-gel coating.

The aforementioned components, as well as the claimed components and the components to be used in accordance with the invention in the described embodiments, are not subject to any special exceptions with respect to their size, shape, material selection and technical concept such that the selection criteria known in the pertinent field can be applied without limitations.

Additional details, characteristics and advantages of the object of the invention are disclosed in the subclaims and the following description of the respective figures - which in an exemplary fashion - show different preferred embodiments of the electric lamp.
- Figure 1: shows a transverse cross-sectional view of an electric lamp,
- Figure 2: shows an illumination distribution in the traffic space of a lamp of Figure 1,
- Figure 3: shows a cross-sectional view III-III of the lamp according to Figure 1,
- Figure 4: shows a calculated reflection spectrum as a function of the wavelength of a Nb₂O₅/SiO₂ interference coating and
- Figure 5: shows a calculated reflection spectrum as a function of the wavelength of a Si₃N₄/SiO₂ interference coating

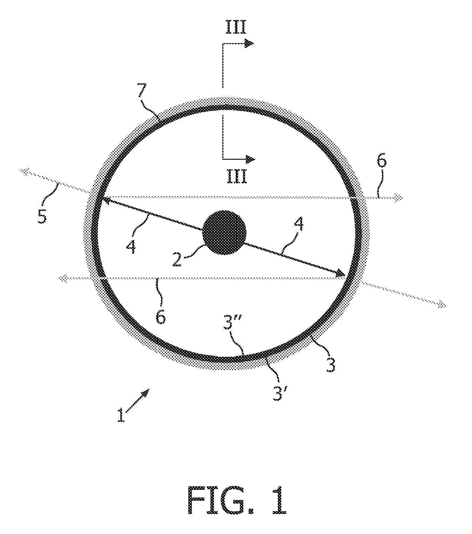

Referring to Figure 1 a lamp 1 for a reflection headlight is illustrated. The lamp 1 comprises a transparent envelope 3 having an exterior surface 3' and an interior surface 3". A light source 2, which emits visible light 4, is inside the lamp envelope 3. On the exterior surface 3 of the whole envelope 3 a multilayer structure 7 is provided. The multilayer structure 7 is made of none light absorption materials. The multilayer structure 7 is an interference coating comprising a sandwich structure with a first 7' and a second layer 7" being positioned alternate to each other. The light source 2 emits visible, white light 4 directed to the envelope 3, in particular to the multilayer structure 7. One part of the light 4 transmits directly the envelope 3 and the multilayer structure 7, without being reflected. The other part of the visible light 4 is reflected at the multilayer structure 7, wherein the multilayer structure 7 being made of none light absorbing materials is provided in such a way, that the color of light of a standard light source A being reflected at the multilayer structure 7 lies within a triangle in the CIE 1931 Yxy color space defined by the x,y coordinates (0.58; 0.42), (0.58; 0.30) and (0.70; 0.30), wherein the lightness Y is in the range of 2.5 ≤ Y ≤ 17.5. As illustrated in Figure 1 the reflected second light 6 transmits the transparent envelope 3 and the multilayer structure 7 nearly at the opposite side of the first reflection area.

The first light 5 leaving the electric lamp 1 comprises a bluish-white color, which is a bundle of lights substantially having peak wavelengths in the range from 400nm to 600nm. The second light 6 leaves the electric lamp 1 with the yellowish-redish color, which also is a bundle of lights having peak wavelengths in the range from 600nm to 800nm. The first light 5 and the second light 6 are directed to a reflector of the vehicle, which is not shown explicitly.

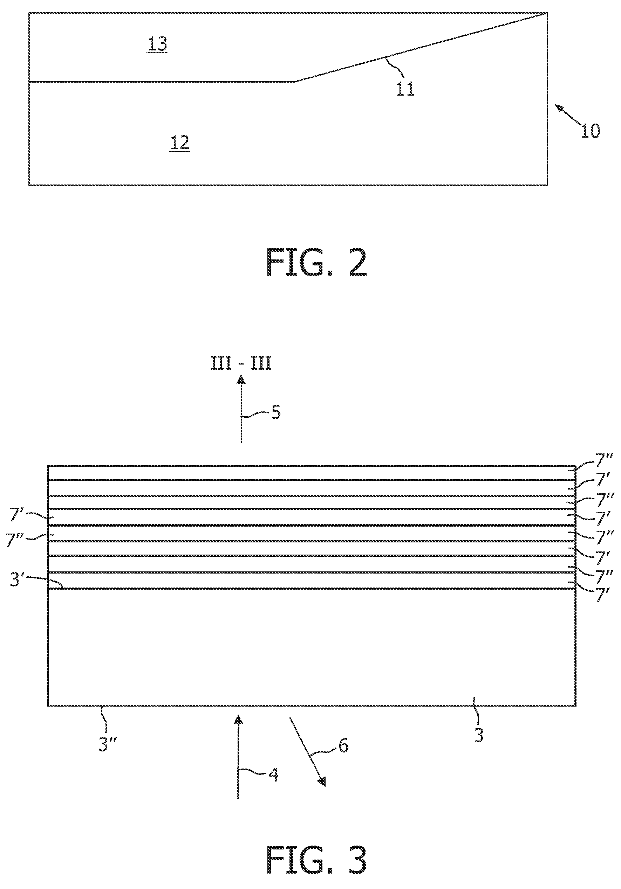

Figure 2 diagrammatically shows the illumination distribution 10 of the lamp 1 according to the invention on a vertical screen, being in front of the vehicle when the low-beam function is realized in accordance with Figure 1. Figure 2 contains an illumination zone 12 and a glare zone 13, which are separated by a bright-dark cut-off 11. According to this invention the illumination zone 12 is substantially illuminated by the first light 5, wherein the region of the bright-dark cut-off 11 is illuminated by the second light 6 substantially. It has been found out that this yellowish-redish second light 6 has a good signal effect for oncoming drivers.

Referring to Figure 3, it can be seen that the multilayer structure 7 positioned upon the exterior surface 3' of the envelope 3 comprises a plurality of layers 7', 7", which are interference coating layers 7',7". In this embodiment, the multilayer structure 7 comprises eight layers 7',7", whereby a first and a second layer 7', 7" are positioned alternate to each other. The first layer 7' comprises Nb₂O₅ and the second layer 7" is made of SiO₂. Table I shows the combination of the eight-layer Nb₂O₅/ SiO₂ multilayer structure 7.

| Table I: | | | |
|---|---|---|---|
| Embodiment of Nb₂O₅/SiO₂ Multilayer structure | | | |
| Layer | Material | Refractive index | Thickness (nm) |
| 1 | Nb₂O₅ | 2,39 | 10,5 |
| 2 | SiO₂ | 1,46 | 203,0 |
| 3 | Nb₂O₅ | 2,39 | 18,9 |
| 4 | SiO₂ | 1,46 | 200,6 |
| 5 | Nb₂O₅ | 2,39 | 18,1 |
| 6 | SiO₂ | 1,46 | 194,4 |
| 7 | Nb₂O₅ | 2,39 | 21,8 |
| 8 | SiO₂ | 1,46 | 102,4 |

| Table II: | | | |
|---|---|---|---|
| Embodiment of Si₃N₄/SiO₂ Multilayer structure | | | |
| Layer | Material | Refractive index | Thickness (nm) |
| 1 | Si₃N₄ | 2,05 | 10,8 |
| 2 | SiO₂ | 1,46 | 190,8 |
| 3 | Si₃N₄ | 2,05 | 21,7 |
| 4 | SiO₂ | 1,46 | 190,8 |
| 5 | Si₃N₄ | 2,05 | 21,7 |
| 6 | SiO₂ | 1,46 | 190,8 |
| 7 | Si₃N₄ | 2,05 | 21,7 |
| 8 | SiO₂ | 1,46 | 190,8 |
| 9 | Si₃N₄ | 2,05 | 21,7 |
| 10 | SiO₂ | 1,46 | 95,4 |

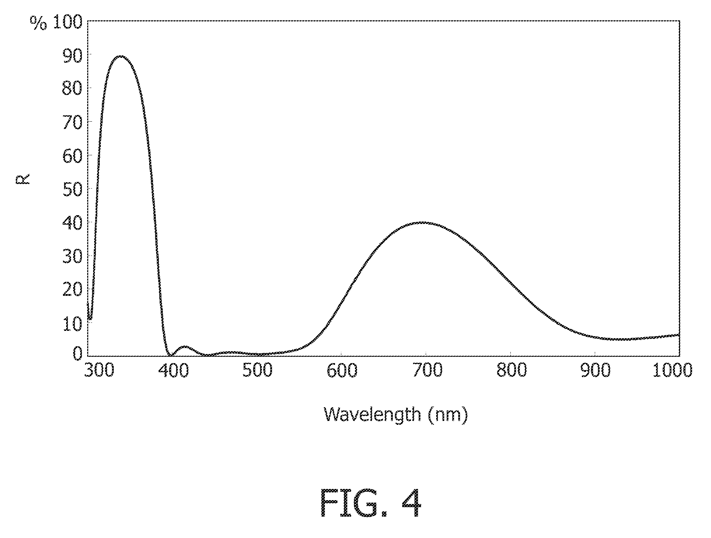

The reflection properties of the multilayer structure 7 according to table I are shown in Figure 4. The reflection R of the multilayer structure 7 in the wavelength range from 400nm ≤ 580nm meets the relation R ≤ 10%. Thus, substantially bluish light passes the multilayer structure 7 without being reflected in the electric lamp 1. In this embodiment the second light 6 being reflected at the multilayer structure 7 is determined by the color co-ordinates (0.643; 0.345), Y = 9.9. According to Figure 4 the reflection value of the reflected second light 6 having a yellowish-redish color is substantially higher than the reflection value of the bluish light. For example, the average value reflection in the wavelength range of approximately 700nm is approximately 40%, that means that approximately 60% of the second light 6 transmits the multilayer structure 7 and leaves the electric lamp 1 in direction to a reflector of a vehicle.

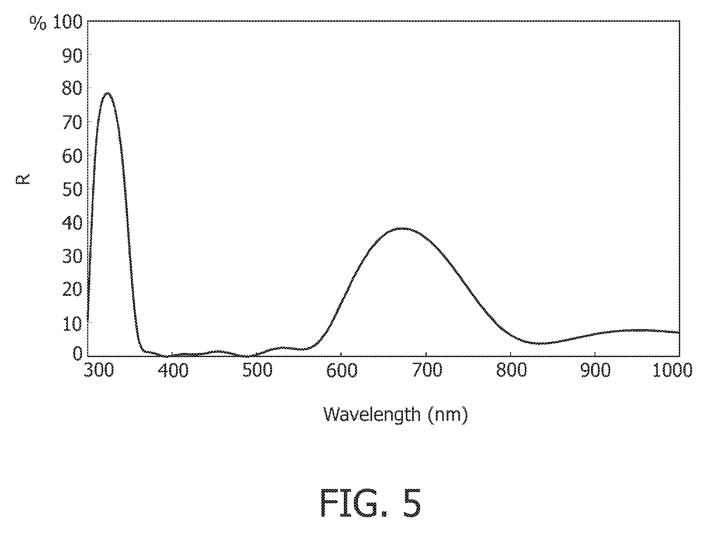

In table II an alternative multilayer structure 7 is shown. The multilayer structure 7 comprises 10 layers 7',7", wherein the first layer 7' is Si₃N₄ and the second layer 7" is made of SiO₂. The calculated reflection spectrum of this interference coating 7 is shown in Figure 5, which comprises similar reflection characteristics like the multilayer structure 7 of table I. In this embodiment the reflected second light 6 is determined by the color co-ordinates (0.646; 0.343), Y=10.0.

Both described multilayer structures 7 according to table I and table II comprise a first layer 7' having a high refractive index n_{H} and a second layer having a low refractive index n_{L}. Another important parameter for achieving the desired reflection characteristics is the thickness of each layer 7',7", shown in table I and table II.

The scope of protection of the invention is not limited to the examples given herein. The invention is embodied in each novel characteristic and each combination of characteristics. Reference numerals in the claims do not limit the scope of the protection thereof.

### LIST OF NUMERALS

- 1: electric lamp
- 2: light source
- 3: transparent envelope
- 3': exterior surface
- 3'': interior surface
- 4: visible light
- 5: first light
- 6: second light
- 7: multilayer structure
- 7': first layer
- 7": second layer
- 10: illumination distribution
- 11: bright-dark cut-off
- 12: illumination zone
- 13: glare zone

## Claims

1. An electric lamp (1) for a vehicle headlight with low-beam function comprising:
a light source (2) emitting visible light (4),
a transparent envelope (3) having an exterior surface (3') and an interior surface (3") enclosing said light source (2),
one multilayer structure (7) provided on the exterior surface (3') of the envelope (3),
wherein a first light (5) substantially with a bluish-white color transmits the multilayer structure (7) directly and
a second light (6) substantially with a yellowish color transmits the multilayer structure (7) after being reflected at the multilayer structure (7),
wherein the multilayer structure (7) being of none light absorbing materials is provided in such a way, that the color of light of a standard light source A being reflected at the multilayer structure (7) lies within a triangle in the CIE 1931 Yxy color space defined by the x,y coordinates (0.58; 0.42), (0.58; 0.30) and (0.70; 0.30), wherein the lightness Y is in the range of 2.5 ≤ Y ≤ 17.5,
wherein none of the emitted visible light (4) is absorbed by the multilayer structure (7).

2. An electric lamp (1) as claimed in claim 1, **characterized in that** the multilayer structure (7) being an interference coating comprises at least one first and one second layer (7',7") with the at least one first layer (7') having a high refractive index n_{H} of n_{H} ≥ 1.7 and the at least one second layer (7") having a low refractive index n_{L} of n_{L} ≤ 1.6.

3. An electric lamp (1) as claimed in claim 1 or 2, **characterized in that** an illumination distribution (10) of the lamp on a vertical screen is produced with a bright-dark cut-off (11), wherein a region (12) lying below the bright-dark cut-off (11) is illuminated by the first light (5) substantially and the bright-dark cut-off (11) is illuminated by the second light (6) substantially.

4. An electric lamp (1) according to any one of the preceding claims, **characterized in that** the first light (5) is a bundle of lights leaving the electrical lamp (1) substantially having peak wavelengths in the range from 400nm to 600nm.

5. An electric lamp (1) according to any one of the preceding claims, **characterized in that** the second light (6) is a bundle of lights leaving the electrical lamp (1) substantially having peak wavelengths in the range from 600nm to 800nm.

6. An electric lamp (1) according to any one of the preceding claims, **characterized in that** the multilayer structure (7) comprises a sandwich structure of first and second layers (7', 7"), which are positioned alternate to each other.

7. An electric lamp (1) as claimed in claim 2, **characterized in that** the first layer (7') comprises Nb₂O₅ and/or TiO₂ and/or Ta₂O₅ and/or ZrO₂ and/or HfO₂ and/or Si₃N₄.

8. An electric lamp (1) as claimed in claim 2, **characterized in that** the second layer (7") comprises SiO₂.

9. An electric lamp (1) according to any one of the preceding claims, **characterized in that** the multilayer structure (7) is provided by CVD, Sputtering, Vaporization or the multilayer structure (7) is a sol-gel coating.

10. An electric lamp (1) according to any one of the preceding claims, **characterized in that** the thickness of the first layer (7') is substantially greater than the thickness of the second layer (7"), wherein the thickness of the multilayer structure (7) is less than 5µm.

11. An electric lamp (1) as claimed in claim 2, **characterized in that** the multilayer structure (7) comprises four first layers (7') of Nb₂O₅ and four second layers (7") of SiO₂, wherein the thickness T₁ of the first layer (7') is in the range of 8nm ≤ T₁ ≤ 25nm and the thickness T₂ of the second layer (7") is in the range of 90nm ≤ T₂ ≤ 210nm.

12. An electric lamp (1) as claimed in claim 2, **characterized in that** the multilayer structure (7) comprises five first layers (7') of Si₃N₄ and five second layers (7") of SiO₂, wherein the thickness T₁ of the first layer (7') is in the range of 8nm ≤ T₁ ≤ 25nm and the thickness T₂ of the second layer (7") is in the range of 90nm ≤ T₂ ≤ 200nm.

13. A lighting device comprising at least one electric lamp (1) according to any one of the preceding claims.

## Patentansprüche

1. Elektrische Lampe (1) für einen Fahrzeugscheinwerfer mit Abblendfunktion, umfassend:
eine Lichtquelle (2), die sichtbares Licht (4) ausstrahlt,
eine transparente Hülle (3) mit einer Außenfläche (3') und einer Innenfläche (3"), die die Lichtquelle (2) umschließt,
eine auf der Außenfläche (3') der Hülle (3) vorgesehene mehrschichtige Struktur (7),
wobei ein im Wesentlichen blauweißes erstes Licht (5) die Struktur (7) unmittelbar überträgt und
ein im Wesentlichen gelbliches zweites Licht (6) die Struktur (7) überträgt, nachdem es auf die Struktur (7) zurückgestrahlt worden ist,
wobei die Struktur (7) aus nicht lichtabsorbierendem Material derart vorgesehen ist, dass die Farbe eines auf die Struktur (7) zurückgestrahlten Lichts einer Standardlichtquelle A in einem Dreieck im CIE 1931 Yxy-Farbraum liegt, das durch die x,y-Koordinaten (0,58; 0,42), (0,58; 0,30) und (0,70; 0,30) definiert wird, wobei die Helligkeit Y im Bereich 2,5 < Y < 17,5 liegt,
wobei keines des ausgestrahlten sichtbaren Lichts (4) von der Struktur (7) absorbiert wird.

2. Lampe (1) nach Anspruch 1, **dadurch gekennzeichnet, dass** die Struktur (7) eine Interferenzschicht ist und mindestens eine erste und eine zweite Schicht (7',7") umfasst, wobei die mindestens eine erste Schicht (7') einen hohen Brechungsindex nH von nH > 1,7 und die mindestens eine zweite Schicht (7") einen niedrigen Brechungsindex nL von nL < 1,6 aufweist.

3. Lampe (1) nach Anspruch 1 oder 2, **dadurch gekennzeichnet, dass** eine Lichtverteilung (10) der Lampe auf einem vertikalen Schirm mit einer Hell-Dunkel-Grenze (11) erzeugt wird, wobei eine Region (12) unterhalb der Grenze (11) im Wesentlichen durch das erste Licht und die Grenze (11) im Wesentlichen durch das zweite Licht (6) beleuchtet wird.

4. Lampe (1) nach einem der vorstehenden Ansprüche, **dadurch gekennzeichnet, dass** das erste Licht (5) ein aus der Lampe (1) austretendes Lichtbündel mit Spitzenwellenlängen ist, die im Wesentlichen im Bereich von 400 - 600 nm liegen.

5. Lampe (1) nach einem der vorstehenden Ansprüche,
**dadurch gekennzeichnet, dass** das zweite Licht (6) ein aus der Lampe (1) austretendes Lichtbündel mit Spitzenwellenlängen ist, die im Wesentlichen im Bereich von 600 - 800 nm liegen.

6. Lampe (1) nach einem der vorstehenden Ansprüche,
**dadurch gekennzeichnet, dass** die Struktur (7) eine sandwichartige Struktur der ersten und zweiten Schichten (7', 7") umfasst, die miteinander alternierend positioniert sind.

7. Lampe (1) nach Anspruch 2, **dadurch gekennzeichnet, dass** die erste Schicht (7') Nb₂O₅ und/oder TiO₂ und/oder Ta₂Os und/oder ZrO₂ und/oder HfO₂ und/oder Si₃N₄ umfasst.

8. Lampe (1) nach Anspruch 2,
**dadurch gekennzeichnet, dass** die zweite Schicht (7") SiO₂ umfasst.

9. Lampe (1) nach einem der vorstehenden Ansprüche,
**dadurch gekennzeichnet, dass** die Struktur (7) durch CVD, Zerstäuben, Verdampfen hergestellt wird oder dass die Struktur (7) eine Solgel-Beschichtung ist.

10. Lampe (1) nach einem der vorstehenden Ansprüche,
**dadurch gekennzeichnet, dass** die Dicke der ersten Schicht (7') erheblich größer ist als die Dicke der zweiten Schicht (7"), wobei die Dicke der Struktur (7) weniger als 5 µm beträgt.

11. Lampe (1) nach Anspruch 2,
**dadurch gekennzeichnet, dass** die mehrschichtige Struktur (7) vier erste Schichten (7') aus Nb₂O₅ und vier zweite Schichten (7") aus SiO₂ umfasst, wobei die Dicke T₁ der ersten Schicht (7') im Bereich von 8 nm < T₁ < 25 nm und die Dicke T₂ der zweiten Schicht (7") im Bereich von 90 nm < T₂ < 210 nm liegt.

12. Lampe (1) nach Anspruch 2,
**dadurch gekennzeichnet, dass** die mehrschichtige Struktur (7) fünf erste Schichten (7') aus Si₃N₄ und fünf zweite Schichten (7") aus SiO₂ umfasst, wobei die Dicke T₁ der ersten Schicht (7') im Bereich von 8 nm < T₁ < 25 nm und die Dicke T2 der zweiten Schicht (7") im Bereich von 90 nm < T₂ < 210 nm liegt.

13. Beleuchtungsvorrichtung, umfassend mindestens eine elektrische Lampe (1) nach einem der vorstehenden Ansprüche.

## Revendications

1. Ampoule électrique (1) pour un phare de véhicule ayant une fonction de feu de croisement comprenant :
une source de lumière (2) émettant une lumière visible (4),
une enveloppe transparente (3) ayant une surface extérieure (3') et une surface intérieure (3") enfermant ladite source de lumière (2),
une structure multicouche (7) prévue sur la surface extérieure (3') de l'enveloppe (3),
dans laquelle une première lumière (5) ayant sensiblement une couleur blanc bleuté transmet la structure multicouche (7) directement et
une seconde lumière (6) ayant sensiblement une couleur jaunâtre transmet la structure multicouche (7) une fois qu'elle a été réfléchie au niveau de la structure multicouche (7),
dans laquelle la structure multicouche (7) constituée de matériaux n'absorbant aucune lumière est prévue de telle manière que la couleur de la lumière d'une source de lumière standard A qui est réfléchie au niveau de la structure multicouche (7) se trouve à l'intérieur d'un triangle dans l'espace couleur Yxy CIE 1931 défini par les coordonnées x, y (0,58 ; 0,42), (0,58 ; 0,30) et (0,70 ; 0,30), la luminosité Y se trouvant dans la plage de 2,5 ≤ Y ≤ 17,5,
dans laquelle aucune lumière visible émise (4) n'est absorbée par la structure multicouche (7).

2. Ampoule électrique (1) selon la revendication 1, **caractérisée en ce que** la structure multicouche (7) étant un revêtement d'interférence comprend au moins une première et une seconde couche (7', 7"), l'au moins une première couche (7') ayant un indice de réfraction élevé n_{H} de n_{H} ≥ 1,7 et l'au moins une seconde couche (7") ayant un indice de réfraction faible n_{L} de n_{L} ≤ 1,6.

3. Ampoule électrique (1) selon la revendication 1 ou 2, **caractérisée en ce qu'**une répartition d'éclairage (10) de l'ampoule sur un écran vertical est produite avec une limite lumineux-sombre (11), dans laquelle une région (12) se trouvant en dessous de la limite lumineux-sombre (11) est éclairée par la première lumière (5) essentiellement et la limite lumineux-sombre (11) est éclairée par la seconde lumière (6) essentiellement.

4. Ampoule électrique (1) selon l'une quelconque des revendications précédentes, **caractérisée en ce que** la première lumière (5) est un faisceau de lumières partant de l'ampoule électrique (1) ayant essentiellement des longueurs d'onde crêtes dans la plage de 400 nm à 600 nm.

5. Ampoule électrique (1) selon l'une quelconque des revendications précédentes, **caractérisée en ce que** la seconde lumière (6) est un faisceau de lumières partant de l'ampoule électrique (1) ayant essentiellement des longueurs d'onde crêtes dans la plage de 600 nm à 800 nm.

6. Ampoule électrique (1) selon l'une quelconque des revendications précédentes, **caractérisée en ce que** la structure multicouche (7) comprend une structure en sandwich des premières et secondes couches (7', 7"), qui sont positionnées en alternance.

7. Ampoule électrique (1) selon la revendication 2, **caractérisée en ce que** la première couche (7') comprend du Nb₂O₅ et/ou du TiO₂ et/ou du Ta₂O₅ et/ou du ZrO₂ et/ou du HfO₂ et/ou du Si₃N₄.

8. Ampoule électrique (1) selon la revendication 2, **caractérisée en ce que** la seconde couche (7") comprend du SiO₂.

9. Ampoule électrique (1) selon l'une quelconque des revendications précédentes, **caractérisée en ce que** la structure multicouche (7) est fournie par dépôt chimique en phase vapeur CVD, pulvérisation cathodique, vaporisation ou la structure multicouche (7) est un revêtement sol-gel.

10. Ampoule électrique (1) selon l'une quelconque des revendications précédentes, **caractérisée en ce que** l'épaisseur de la première couche (7') est sensiblement plus importante que l'épaisseur de la seconde couche (7"), dans laquelle l'épaisseur de la structure multicouche (7) est inférieure à 5 µm

11. Ampoule électrique (1) selon la revendication 2, **caractérisée en ce que** la structure multicouche (7) comprend quatre premières couches (7') de Nb₂O₅ et quatre secondes couches (7") de SiO₂, dans laquelle l'épaisseur T₁ de la première couche (7') est dans la plage de 8 n_{L} ≤ T₁ ≤ 25 nm et l'épaisseur T₂ de la seconde couche (7") est dans la plage de 90 n_{L} ≤ T₂ ≤ 210 nm.

12. Ampoule électrique (1) selon la revendication 2, **caractérisée en ce que** la structure multicouche (7) comprend cinq premières couches (7') de Si₃N₄ et cinq secondes couches (7") de SiO₂, dans laquelle l'épaisseur T₁ de la première couche (7') est dans la plage de 8 n_{L} ≤ T₁ ≤ 25 nm et l'épaisseur T₂ de la seconde couche (7") est dans la plage de 90 n_{L} ≤ T₂ ≤ 200 nm.

13. Dispositif d'éclairage comprenant au moins une ampoule électrique (1) selon l'une quelconque des revendications précédentes.
